# EUROPEAN PATENT APPLICATION

(11) **EP 2 093 324 A1**
(43) Date of publication of application: **26.08.2009**
(21) Application number: 08171876.9
(22) Date of filing: 16.12.2008
(51) Int. Cl.: D21H 17/51, D21H 27/26, D21H 27/30, B32B 27/42

(54) **Through color high pressure decorative laminate and method of making same**

(30) Priority: 18.12.2007 US 958883
(71) Applicant: The Diller Corporation, Cincinnati OH 45241-3109 (US)
(72) Inventor: O'Brien, Kevin Francis, Cincinnati, OH 45247 (US); Taillan, Frederic Auguste, Loveland, OH 45140 (US)
(74) Representative: Bumke, Jakob Wenzel

(57) **Abstract**

A decorative laminate is provided and includes a core having a plurality of stacked paper sheets which are impregnated therein a melamine-formaldehyde resin and an internal plasticizer for the melamine-formaldehyde resin, the plasticizer comprising an amino-functional monomer; a decorative sheet overlying the core, the decorative sheet having impregnated therein a melamine-formaldehyde resin and an internal plasticizer for the melamine-formaldehyde resin; and, optionally, an overlay sheet on the decorative sheet. A combustion accelerant is also included in the resin.

## Description

### BACKGROUND OF THE INVENTION

This invention relates to heat and pressure consolidated decorative laminates, and more particularly to such laminates wherein the decorative surface and core sheets have closely matching or complementary colors.

High pressure decorative laminates (HPDL) are known in the art for use as surfaces for countertops, table tops, vanities, cabinets, furniture, wall paneling and the like applications. Such decorative laminates have found commercial acceptance for many years and exhibit desirable wear resistance, chemical resistance, and heat resistance. Such laminates are also available in a wide variety of designs and colors.

Conventional high pressure decorative laminates are typically produced by consolidating and curing under heat and pressure a series of stacked core sheets with a decorative surface sheet. A melamine-formaldehyde resin impregnated decorative paper, optionally covered with a protective melamine resin impregnated translucent alpha-cellulose "overlay" sheet, together form the laminate's decorative surface. A plurality of phenol-formaldehyde resin impregnated natural kraft paper sheets or filler plies typically form the supporting core of the laminate.

While the kraft paper/phenolic resin filler plies greatly enhance the mechanical strength, impact resistance, dimensional stability, and stress crack resistance of the consolidated laminate sheet product, the phenolic core has one well recognized deficiency. When the laminate is bonded to a substrate such as particleboard or medium density fiberboard (MDF), and machined to a final fabricated product, such as a table top, countertop, or cabinet, the finished edge of the underlying filler layer, inherently a dark brown color due to the phenolic resin, remains perceptible and in stark contrast to the decorative surface color. The lighter the surface color, the more visually distracting and aesthetically objectionable the dark edge becomes. In addition, with age, the phenolic edge tends to oxidize and further darken.

For many years laminators have sought to eliminate the core's dark edge and produce a "through color" laminate in which the core and its machined edge closely match the decorative surface color. However, several serious obstacles have been encountered, including maintaining the mechanical properties and strength of the laminate and finding inexpensive alternative core materials that are cost competitive with the relatively inexpensive kraft paper/phenolic resin filler plies typically used in conventional high pressure decorative laminates.

Early attempts at producing through color high pressure decorative laminates simply replaced the kraft paper/phenolic resin filler with several plies of conventional melamine resin impregnated, pigmented solid color decorative paper as the core, albeit at additional expense. Alternatively, the substitution of several plies of a melamine resin treated solid color paper closely matching the background color of a print pattern, such as a woodgrain design, was also attempted. Such attempts were largely unsuccessful due to serious problems encountered during manufacture and end use. In some instances, under the applied heat and pressure used to consolidate and cure the laminate, the sheets would shatter (termed "pressure breaks") during cooling in the laminating press. Additionally, once these laminates were bonded to a substrate, they exhibited a propensity to crack, particularly with changes in relative humidity, after field installation (termed "stress cracking").

Some through color high pressure decorative laminates have been produced using less brittle unsaturated polyester resins. It was, however, necessary to use the polyester resins to treat the decorative surface components as well as the filler materials, significantly complicating the manufacturing process. Although it would have been preferable to use melamine resins for the decorative surface components, and limit the use of the polyester resins to the laminate core, for reasons delineated below, the two types of resins are chemically incompatible, and cannot bond directly with each other, since they crosslink and cure by entirely different mechanisms, i.e., acid catalyzed condensation polymerization and free radical polymerization, respectively.

Although such laminates generally avoided serious stress cracking problems, there were other problems including the high cost of polyester resin, difficulties in treating the component papers with viscous, solvent-based resins, and inferior surface hardness, durability, and stain, heat, and light (fade) resistance compared to conventional melamine resin surfaced HPDL. Also, polyester resins were more prone to yellowing during high temperature pressing, complicating efforts to provide consistent color matching. Furthermore, since cured, unsaturated polyester resins are generally less heat resistant than both melamine and phenolic resins, postformability was problematic due to poor blister resistance and surface yellowing at the heated bends.

Other attempts have been made to produce through color decorative laminates using modified melamine resins for the core. For example, hydroxyalkyl melamine resins are taught by Keeling, et al., U.S. Patent Nos. 4,424,261 and 4,448,849, for use in decorative laminates. Other resins have also been used, including polymethylolketone resins described by Knapp, et al., U.S. Patent No. 4,530,883. However, all of these resin compositions and through color laminates suffered from one or more drawbacks in either cost, processability, finished product characteristics, or some combination thereof.

In addition, the aforementioned through color laminates of the prior art were unable to achieve an acceptable, i.e. ASTM E-84/UL723 Class I (A) or Class II (B), fire test rating to allow their use in commercial applications, restricting their utility to residential use. While the polyester laminates typically exhibited unsatisfactorily high flame spread, the melamine and modified melamine resin-based laminates generated excessive smoke, often precluding even the lowest Class III (C) fire rating as a result.

Accordingly, there remains a need in this art to provide an inexpensive, simple, controllable process to produce a through color high pressure decorative laminate having improved color fidelity and stability, stress crack resistance, heat resistance, postformability, and fire test burning characteristics, using melamine resin treated decorative surface papers in conjunction with modified melamine resin treated core papers.

### SUMMARY OF THE INVENTION

The present invention addresses those needs and provides a high pressure decorative laminate and method of making same in which the color of the core of the laminate closely matches or is complementary to that of the uppermost decorative solid color surface, or optionally, the predominant background color of a printed design, such as a woodgrain pattern. Such matching of the laminate core color to the decorative surface color eliminates the aesthetically objectionable dark brown edge appearance of phenolic resin impregnated natural kraft paper typically used as the core of conventional high pressure decorative laminates. As a result, fabricated articles, such as table tops, countertops and vanities, appear to have a solid appearance, rather than the clad appearance of an applied surfacing material.

According to one aspect of the present invention, one or more pigmented cellulosic paper sheets impregnated or treated with a substantially clear and colorless modified melamine-formaldehyde resin are provided with the desired color. As another aspect of the present invention, one or more unpigmented cellulosic paper sheets impregnated with a pigmented, modified melamine-formaldehyde resin are provided with the desired color. The impregnated cellulosic sheets may comprise pigmented or unpigmented bleached kraft paper or alpha-cellulose paper. However, for simplicity and cost considerations, the use of a clear, modified melamine resin, in conjunction with pigmented bleached kraft paper, is preferred. The pigmented and melamine resin impregnated paper sheets may be used to form the core portion of the through color high pressure decorative laminate.

The core sheets are impregnated from about 32% to about 43%, and preferably from about 35% to about 40%, by weight of resin solids, based on the total weight of the impregnated sheet, with a modified melamine-formaldehyde resin, wherein the molar ratio of formaldehyde to melamine is in the range of from about 1.20:1 to about 1.60:1, and preferably from about 1.35:1 to about 1.45:1, and from about 15% to about 32%, and preferably from about 18% to about 28%, by weight, based on total resin solids weight, of a combination of one or more internal plasticizers for the melamine-formaldehyde resin, said internal plasticizers comprising melamine-formaldehyde resin reactive, amino-functional monomers selected from the group consisting of sulfonamides, guanidines, and triazines, i.e. substituted melamines. Preferred internal plasticizers include, for example, the ortho and/or para isomers of toluenesulfonamide, dicyanodiamide (cyanoguanidine) and acetoguanamine (2,4-diamino-6-methyl-1,3,5-triazine). Those skilled in the art will appreciate other internal, melamine resin reactive, plasticizers may also be used advantageously.

The impregnated core sheets also contain from about 10% to about 24%, and preferably from about 13% to about 20%, by weight, based on total resin solid weight, of a combustion accelerant selected from the group comprising flammable hydroxy and polyhydroxy-functional alcohols and glycols, or combinations thereof, where said compounds are miscible in aqueous solvated melamine resins, and have high boiling points substantially above the 150°C maximum oven drying temperature typically used in the paper treating process, therefore minimizing vaporization losses of these materials during core paper impregnation and drying. Preferred combustion accelerants include diethylene glycol (boiling point 246°C), 2-phenoxyethanol (boiling point 245°C), and a mixture of 200 to 600 molecular weight polyethylene glycols (boiling point approximately 250°C), or combinations thereof. Those skilled in the art will appreciate that other combustion accelerants may also be used advantageously.

The resin impregnated core sheets are used in conjunction with a decorative sheet to form the through color high pressure decorative laminate of the present invention. The decorative layer can either be comprised of a modified melamine-formaldehyde resin impregnated, pigmented alpha-cellulose solid color paper, or alternatively, a modified melamine-formaldehyde resin impregnated, pigmented alpha-cellulose print paper, on whose uppermost surface a printed woodgrain, stone, abstract or other design has been imparted. If a decorative print sheet is selected, it is typically covered with a light weight, modified melamine-formaldehyde resin impregnated, unpigmented alpha-cellulose overlay paper, which becomes translucent or transparent after pressing, and enhances the durability, wear and abrasion resistance of the decorative print sheet.

Alternatively, an unimpregnated decorative print sheet may be used in conjunction with typically an even lighter weight, higher resin content melamine resin impregnated overlay sheet which donates its excess resin to the print sheet as the resin flows during the pressing operation prior to curing. In general, whether an impregnated or unimpregnated decorative print sheet is used, the total quantity of melamine surface resin, i.e. the print resin content plus the overlay resin content, should be comparable to insure acceptable laminate surface properties such as abrasion, heat, hot water and blister resistance.

Although different melamine-formaldehyde resin formulations may be used to impregnate the solid color paper, or alternatively, the decorative print and overlay papers, for simplicity it is preferred that the same melamine resin be used for impregnation of all the various surface papers. In one embodiment, the melamine surface resin should, however, preferably be different than the modified melamine-formaldehyde resin used to impregnate the core sheets. In general, the melamine surface resin should be less plasticized than the melamine core resin, although the same amino-functional internal plasticizer, or combination of plasticizers, are preferred, albeit at a lower concentrations. Excessive plasticization of the surface layer(s) can deleteriously affect properties such as impact, heat, scratch, stain and hot water resistance of the finished product. Similarly, it is preferred that the hydroxyl-functional combustion accelerant be omitted from the surface resin insure acceptable laminate surface properties.

As another preferred embodiment of the present invention, the modified melamine resin impregnated surface papers can generally be those also used to produce conventional postforming grade, phenolic resin/kraft paper core HPDL. Such interchangeability of the treated surface papers substantially simplifies the overall manufacturing process.

As such, the resin impregnated sheets used to form the through color high pressure decorative laminate of the present invention comprise:
(a) a core comprising a plurality of stacked paper sheets having impregnated therein preferably from about 35% to about 40% by weight of resin solids, based on the total weight of the impregnated sheet, of a melamine-formaldehyde resin, wherein the molar ratio of formaldehyde to melamine is in the range of preferably from about 1.35:1 to about 1.45:1, preferably from about 18% to about 28% by weight, based on total resin solids weight, of an internal plasticizer comprising amino-functional monomers selected from the group consisting of sulfonamides, guanidines and substituted melamines, and preferably from about 13% to about 20% by weight, based on total resin solids weight, of a combustion accelerant comprising hydroxy or polyhydroxy-functional compounds selected from the group consisting of high boiling, water soluble alcohols and glycols; and
(b) a decorative solid color sheet superimposed on the core, the decorative solid color sheet having impregnated therein from about 45% to about 53% by weight of resin solids, based on the total weight of the impregnated sheet, of a melamine-formaldehyde resin, wherein the molar ratio of formaldehyde to melamine is in the range of from about 1.25:1 to about 1.45:1, and from about 5% to about 12% by weight, based on total resin solids weight, of an internal plasticizer comprising amino-functional monomers selected from the group consisting of sulfonamides, guanidines and substituted melamines; or alternatively
(c) a decorative print sheet superimposed on the core, the decorative print sheet having impregnated therein from about 33% to about 39% by weight of resin solids, based on the total weight of the impregnated sheet, of a melamine-formaldehyde resin, wherein the molar ratio of formaldehyde to melamine is in the range of from about 1.25:1 to about 1.45:1, and from about 5% to about 12% by weight, based on total resin solids weight, of an internal plasticizer comprising amino-functional monomers selected from the group consisting of sulfonamides, guanidines and substituted melamines; and optionally
(d) an overlay sheet superimposed on the decorative print sheet, the overlay sheet having impregnated therein from about 66% to about 74% by weight of resin solids, based on the total weight of the impregnated sheet, of a melamine-formaldehyde resin, wherein the molar ratio of formaldehyde to melamine is in the range of from about 1.25:1 to about 1.45:1, and from about 5% to about 12% by weight, based on total resin solids weight, of an internal plasticizer comprising amino-functional monomers selected from the group consisting of sulfonamides, guanidines and substituted melamines.

Where the decorative sheet is a solid color pigmented paper, the core sheets are selected to have substantially the same color. Where the decorative sheet comprises a print sheet such as a woodgrain design, the core sheets are selected to substantially match the predominant color of the decorative sheet, which may be the color of the pigmented print base paper. The resultant through color decorative laminate may subsequently be bonded to a substrate such as particleboard, plywood or fiberboard.

Accordingly, it is a feature of the present invention to provide a through color high pressure decorative laminate that is relatively inexpensive and simple to manufacture and which has improved fire test rating, stress crack resistance, heat blister resistance, and postformability as compared to the prior art. A further feature of the invention includes providing such a laminate with improved dimensional stability and relative humidity change induced warpage behavior. Other features and advantages of the present invention will be apparent from the following detailed description, the accompanying drawings, and the appended claims.

### BRIEF DESCRIPTION OF THE SEVERAL VIEWS OF THE DRAWINGS

The following detailed description of specific embodiments of the present invention can be best understood when read in conjunction with the following drawings, where like structure is indicated with like reference numerals and in which:
Fig. 1 is a cross-sectional view of one embodiment of the through color high pressure decorative laminate of the present invention with a solid color surface layer;
Fig. 2 is a cross-sectional view of another embodiment of the through color high pressure decorative laminate of the present invention with a print pattern surface layer protected by an overlay; and
Fig. 3 is a cross-sectional view of one embodiment of the through color high pressure decorative laminate of the present invention, in this case that of Fig. 1, bonded to a substrate material to form a final panel assembly.

### DETAILED DESCRIPTION

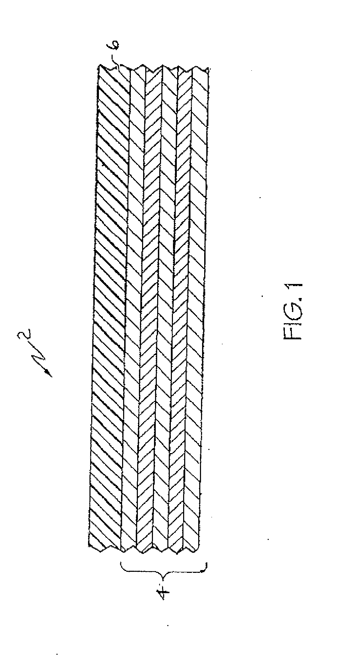

It should be appreciated that the U.S. Patent and Trademark Office's requirements for black-and-white drawings prevents the depiction of the multi-colored aspects of embodiments of the present invention. Referring initially to Fig. 1, one embodiment of the through color high pressure decorative laminate 2 of the present invention is depicted. The laminate is comprised of a core 4 comprising one or more cellulosic sheets impregnated with a heat curable, substantially clear and transparent liquid thermosetting resin. In the embodiment shown, the cellulosic sheets are a series of stacked papers comprising pigmented bleached kraft paper. The preferred resin is an essentially colorless, modified melamine resin that will be described in greater detail below.

It will be appreciated by those versed in the art that a colored laminate core can be achieved by employing other varieties of cellulosic sheets, such as, for example, unpigmented bleached kraft paper, and using a pigmented resin to impregnate the sheets. However, though workable, use of various colored pigmented resins may cause contamination of the treating equipment, resulting in less efficiency and higher scrap. Therefore, the use of pigmented papers, in conjunction with an unpigmented substantially colorless and transparent liquid resin, is preferred. The core provides a reinforcing structural base to the laminate.

A preferred structure of the core layer is to provide from 2 to 20 sheets of an 80 to 210 grams per square meter (gsm), or 50 to 130 pounds per 3000 square feet ream basis weight bleached kraft paper, impregnated with a modified melamine-formaldehyde resin. Typically, the liquid melamine resin is an aqueous solution having a resin solids content of from about 39% to 44% by weight. The substantially transparent and colorless melamine resin used in forming the core is modified using an internal plasticizer and a combustion accelerant. As used herein, the term "internal" plasticizer refers to materials, and preferably amino-functional monomers, that are preferentially reactive with melamine-formaldehyde resins. While not wishing to be bound by any specific theory, the generally accepted reaction mechanisms in the art are that either the plasticizers' amino functionality first reacts with free formaldehyde in the resin to form their methylolated analogues, which in turn react preferentially with the melamine resins' amino functionality, forming methylene bridges, or alternatively, the plasticizers' amino functionality reacts directly with methylolated melamine or the melamine resin's pendant methylol groups, again forming methylene bridges, or more likely, a combination thereof. Another possible reaction mechanism, albeit less prevalent, is that the methylolated plasticizer monomers react with methylolated melamine or the melamine resin's methylol groups to form intermediate ether linkages, which eventually decompose, with generation of bound formaldehyde, to the more stable methylene bridges.

In any case, the result is that the internal plasticizer's primary function in the resin is to limit the degree of crosslinking during the resin's polymerization and cure, thus increasing the resin's toughness and flexibility. This flexibilizing of the core resin results in a through color laminate with improved stress crack resistance and postforming characteristics, in terms of reduced forming temperature, bending radius and forming force. Preferred melamine-formaldehyde resin reactive internal plasticizers comprise amino-functional monomers selected from the group consisting of sulfonamides, guanidines and triazines, i.e. substituted melamines. Examples of preferred internal plasticizers useful in the practice of the present invention are, but not limited to, ortho-toluenesulfonamide and/or para-toluenesulfonamide, dicyanodiamide and acetoguanamine.

As used herein, the term "combustion accelerant" refers to water soluble and otherwise aqueous solvated melamine resin compatible, high boiling point, flammable, liquid organic compounds that tend to promote burning of melamine resins in particular. Preferably, such combustion accelerants have hydroxy or polyhydroxy functionality, and include alcohols and glycols. Preferably, their boiling points should be at least 50°C above the maximum paper treater oven drying temperature, which is generally about 150°C for melamine resins, such that vaporization and treater stack losses are minimized. Typical examples of combustion accelerants for use in embodiments of the present invention include diethylene glycol, 2-phenoxyethanol, various molecular weight polyethylene glycols, and the like, or mixtures and blends thereof.

The primary function of the combustion accelerant is to increase the flammability of the core of the laminate, which represents about 80% of the total mass of the laminate. This alters the overall burning characteristics of the melamine resin-based through color laminate of the present invention. The ASTM E-84/UL723 large scale tunnel fire test determines both a laminate clad panel assembly's flammability, as measured by flame spread, and smoke generation. Consideration of both parameters determines the fire test rating. Use of a combustion accelerant in the core of the through color laminate of the present invention increases flame spread, but in doing so, substantially reduces smoke generation, thereby providing better balancing of the two opposed properties. However, the amount of a combustion accelerant must be carefully controlled to provide optimal balancing.

Those versed in the art will appreciate that cured melamine resin/paper laminate composites generally do not burn, but rather char and smoke excessively. One reason is that when heated above their ignition/thermal decomposition temperature, such laminates generate substantial hydrogen cyanide gas, a fire retardant gas. With the melamine resin-based through color laminates of the prior art, discussed previously, measured flame spread values were within acceptable limits. However, such laminates produced excessive smoke generation which often resulted in a failure to achieve even the poorest Class III (C) fire rating. Conversely, with conventional phenolic resin/paper core HPDL, even with a melamine resin/paper surface layer, flame spread was rapid, while smoke generation was generally only moderate. The inventors have surprisingly discovered that a high boiling, water soluble, flammable organic compound can be incorporated into the through color laminate melamine core resin, and, in the proper concentrations, effectively balances the laminate's flame spread and smoke generation properties such that higher class fire ratings are achieved.

Further, such combustion accelerants also have secondary and tertiary beneficial effects. They also function as non-reactive melamine resin external plasticizers in the laminate core. As such, they behave as partially dried melamine resin flow promoters in the treated core paper, allowing the papers to be treated to substantially lower resin content and volatile content than would be possible if the resin flow was solely dependent on the treated paper's volatile or moisture (essentially residual water) content, while still insuring adequate resin flow, interlaminar bonding and core consolidation during pressing. The resultant lower resin content and moisture content in the core of the pressed laminate significantly improves its dimensional stability, warpage behavior and stress crack resistance, in synergy with the core resin's high degree of internal plasticization. The lower resin content in the core also reduces smoke generation. Finally, these compounds act in concert with the internal plasticizer of choice to improve both stress crack resistance and postformability of the laminate.

Referring again to Fig. 1, a pigmented solid color decorative paper sheet 6 is placed in superimposed position adjacent to the core 4, and is cured and bonded to the surface of the core during pressing simultaneously with the cure and consolidation of the core's plies. Such solid color decorative paper typically comprises α-cellulose fibers, which has had incorporated therein colored pigments during the papermaking process. As will be appreciated, a variety of different pigmented colors are possible. Such papers typically vary from about 65 to 146 gsm (about 40 to 90 pounds/ream) basis weight, which weight is largely dependent on the color and opacity of the paper. The paper is preferably impregnated with a modified melamine surface resin as described previously herein, and partially dried prior to pressing to form the decorative laminate. It is preferred that the modified melamine-formaldehyde surface resin used to impregnate the solid color decorative paper sheet be less plasticized, and treated to a higher resin content, than the core resin to enhance the through color laminate's surface hardness and insure acceptable related properties such as water, stain, scratch, and heat resistance. Generally, the overall thickness of the laminate is from about 0.5 to about 1.5 mm, more preferably from about 0.8 to about 1.2 mm., to generally optimize both the laminate's stress crack resistance and postformability properties.

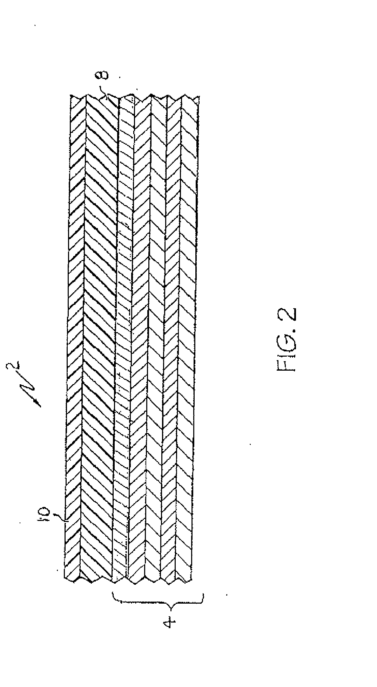

Referring now to Fig. 2, another preferred embodiment of the through color high pressure decorative laminate 2 of the present invention is shown. In Fig. 2, a laminate construction having a similar core 4 is shown but with the solid color decorative layer 6 (Fig. 1) replaced with a treated decorative paper 8 having a printed design (not shown) on its uppermost surface, and oriented facing away from the laminate core so that the design is visible in the final pressed product. The print sheet base paper 8 is typically comprised of α-cellulose fibers having one or more fillers and various pigments which have been added during the papermaking process.

The print pattern design is most commonly applied to one side of the base paper using a multi-station rotogravure printing process, and can be a woodgrain, mineral or stone, ceramic, metal, leather or abstract design. In this embodiment, the core paper color is chosen to match either the base paper color of the printed design, or the predominant subcoat or airbrush background color of the particular print design. The print sheet is either impregnated with the modified melamine-formaldehyde surface resin, much the same as with the solid color treating process discussed above, or used without resin treatment. Print papers typically vary in basis weight from about 50 to about 105 gsm, or about 30 to 65 pounds/ream, depending on the base paper color, the overall print tone, ink coverage, and opacity of the printed paper.

Typically, with the use of a treated print sheet, and obligatory with use of an untreated print sheet, print sheet 8 is covered with a melamine resin treated overlay sheet 10, which is utilized to protect the surface of the laminate from staining, scuffing, abrasion, and other wear. Overlay papers typically are essentially pure α-cellulose fiber, without any fillers, pigments, or opacifiers. Typically overlay papers will vary from about 20 to 40 gsm, or about 12 to 25 pounds/ream, and are preferably impregnated with the same type of less plasticized melamine-formaldehyde surface resin used to treat the print and solid color papers. Tinted overlay papers can be used to complement and enhance the fidelity of the print design, particularly with woodgrains. When cured, during pressing, the protective overlay layer becomes translucent and nearly transparent, allowing the print design beneath to be seen.

The lower the basis weight of the overlay sheet, the less perceived cloudiness or milkyness will occur, resulting in a clearer optical print design with enhanced color fidelity, particularly with darker print designs. Furthermore, when using untreated print sheets, it is preferable to use a lighter basis weight overlay paper. Laminate surface bond integrity, in such an embodiment, is dependent on the overlay paper donating a portion of the resin impregnated therein to the untreated print paper during resin flow in the pressing operation. Lighter basis weight overlay papers facilitate impregnation to requisite higher resin contents and are less prone to entrap resin and fail to donate adequate resin to the adjacent print layer. In general, whether a treated or untreated print sheet is used in conjunction with a treated overlay sheet, the total melamine surface resin content of both combined sheets should be comparable, and higher than the resin content of the underlying core, to insure acceptable laminate surface properties, as is the case when using treated solid color decorative surface papers.

Abrasive particles, such as aluminum oxide, can optionally be incorporated into the overlay paper during the papermaking process, or alternatively, suspended in the melamine resin during the overlay treating operation, to further enhance surface wear properties such as abrasion, scratch, and mar resistance of the laminate. Typically, the abrasive particles range in size from about 0.5 to 25 microns in diameter, with typical deposition concentrations on or in the overlay paper of about 0.5 to 5 gsm. Similar sizes and quantities of abrasive material can also be advantageously employed on or in, and preferably on the felt-side top surface of, a solid color decorative paper to enhance its wear properties as well. Various combinations of different particle sizes may be used to advantage.

As will be understood by those versed in the art, there are several impregnation or treating methods typically used for the solid color, print, and overlay papers. The most commonly used method for all three types of papers involves prewetting the bottom, wire, non-decorative side of the paper with melamine resin, followed by passing the paper over an elevated "sky roll" to provide dwell time for the resin to penetrate into, and deaerate, the paper prior to immersion of the prewetted paper into the main resin bath. This is followed by passing the impregnated paper through a set of metering rolls, whose nip is adjusted to control the paper's liquid resin pick-up and final resin content after partial drying. The impregnated paper then passes through a tunnel drying oven where a combination of line speed and oven temperature are used to control the volatile content of the treated paper. Such a method is often called "prewet, sky, and dip and squeeze."

Optionally, abrasive particles can be added and suspended, with the aid of a suitable thickening agent such as carboxymethyl cellulose, into the recirculated resin bath, where the particles will be randomly distributed into and on both sides of the paper during immersion. However, a preferred and more effective and controlled distribution of the abrasive material onto one or both faces of the paper, and more particularly, preferably on the top face of a solid color paper and on both the top and bottom sides of an overlay, is achieved by employing two drying steps. That is, a split tunnel drying oven is used. The partially prewet, sky and dip and squeeze resin impregnated paper is only partially dried in a first oven section, and is then passed between an intermediate top coating station, and optionally, also a bottom coating station, where additional melamine resin containing abrasive particles is applied to one or both sides of the partially treated paper. Then the impregnated and coated paper enters a second drying oven section to complete the drying process to the desired final volatile content (and resin content).

A simple prewet, sky, and dip and squeeze treating method can be used for the pigmented core filler papers as well, although other methods, such as double-sided squeeze roll coating may be used, where the filler paper passes through a meter roll nip which has an excess resin puddle accumulated directly at the in-feed side of the rolls both above and below the paper path as it passes through the rollers. Again, nip adjustment is used to control resin pick-up and resin content, and a combination of line speed and oven temperature are used to control the volatile content of the paper.

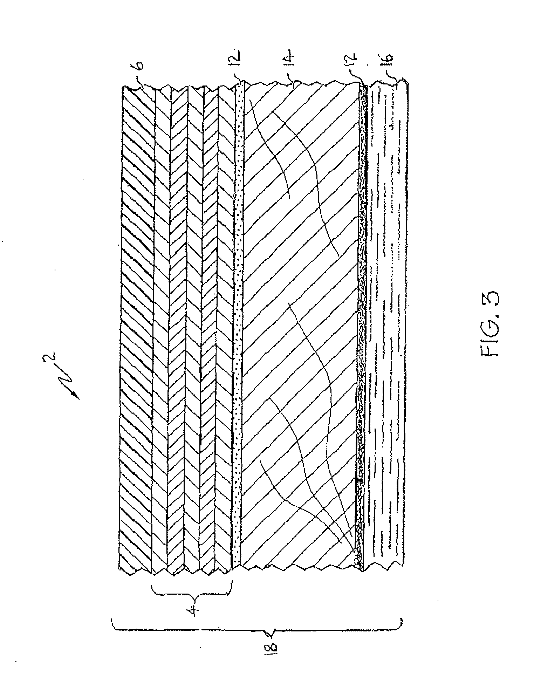

Referring now to Fig. 3, another embodiment is shown in which the solid through color high pressure laminate **2** of Fig. 1 is bonded using a suitable adhesive **12** to a suitable substrate **14**. Preferably, on the opposite side of substrate **14** a suitable backer or balancing sheet 16 is bonded, using an adhesive **12**, to form a completed balanced panel assembly **18**. Assembly **18** can be used, for example, in the manufacture of table tops, wall panels, cabinet components, countertops, vanities, doors, toilet partitions, and a wide variety of other applications as is known in the art. Commonly used adhesives include neoprene rubber-based sprayable or brushable contact cements, or catalyzed or uncatalyzed, cold or hot press, rollable or spreadable polyvinyl acetate (PVAc) glues. The influence of adhesive choice on panel assembly fire rating will be discussed below. Specialized applications may require other types of adhesives.

Preferred substrates include medium density fiberboard (MDF) and 45 pound per cubic foot particleboard due to their surface smoothness and ease of machining. In addition, the dimensional movement of such substrates due to changes in relative humidity more closely match that of conventional high pressure decorative laminate, as well as the through color laminate of the present invention, than for example, plywood. This reduces stress at the glue line, panel warpage and stress cracking. For more specialized applications, other substrates such as fire-rated particleboard or MDF, steel or aluminum sheet stock, mineral fiber cement board, fiber reinforced polyester sheet (FRP) or various honeycomb materials may be used advantageously.

The following examples are provided for purposes of illustration only and are not to be construed as limiting the scope of the present invention, which is defined in the appended claims. All parts and percentages are reported by weight unless otherwise indicated.

### Example 1

To a suitable stainless steel reactor, equipped with a steam heating and cooling water jacket, agitator, condenser, and vacuum pump, are charged, in order, 32.05 parts of a 37% aqueous formaldehyde solution and 27.12 parts deionized water. The pH of the mixture is adjusted with approximately 0.05 parts of a 30% sodium hydroxide solution to 9.5 ± 0.1. Then, 35.54 parts melamine and 3.88 parts dicyanodiamide (1-cyanoguanidine) are charged to the reactor. The pH of the slurry is adjusted, if necessary, using sodium hydroxide solution to a pH of 9.4 ± 0.1. With the reactor vent closed, the agitated mixture is heated for approximately 50 minutes to reflux at about 1.0 bar gauge pressure and about 120°C.

After 5 minutes, upon solution of the melamine and dicyanodiamide, the resin is rapidly cooled to 95°C using jacket cooling water, controlled reflux venting of the reactor, and then vacuum reflux. The reaction is held at 95°C to a final water tolerance of 40% to 80%. Water tolerance, as used herein, is defined as the quantity of 25°C water that can be added to a sample of the resin at 25°C before the resin, due to its increasing hydrophobicity, phase separates and clouds. For example, a 60% water tolerance is the point where 6 ml. of water can be added to 10 ml. of resin before reaching the cloud point. After reaching the water tolerance, the resin is rapidly cooled, using jacket cooling water and vacuum reflux, to 30°C. The reactor is then vented to atmosphere, and 0.17 parts F0306H release agent (from Hexion Specialty Chemicals, Inc.) and 1.19 parts CRC636 latent catalyst (a 25% aqueous solution of para-toluenesufonic acid-morpholine salt from Capital Resins Corporation) are then added. The latter is used, as required, to adjust the final resin pH to 9.1 ± 0.1 at 20°C. The modified melamine resin so prepared has a solids content of about 49% after drying 3 hours in an oven at 135°C, a water tolerance at 20°C of about 50%, a Brookfield viscosity at 20°C (spindle #1, speed 100 rpm) of about 20 cps., and a Sunshine gel time at 127°C of about 25 minutes.

### Example 2

A 1.4:1 formaldehyde-to-melamine mol ratio, dicyanodiamide modified melamine resin prepared as in Example 1 is used to treat a 122 gsm (75 pound/ream) titanium dioxide pigmented alpha-cellulose white solid color decorative paper (from Mead/Westvaco Corporation) to a 51% - 53% resin content and a 6.5% - 8.5% volatile content. As used herein, the term "resin content" is defined as the difference in weight of a given area of the treated paper and the initial untreated "raw" paper divided by the weight of the treated paper, expressed as a percentage. Similarly, as used herein, the term "volatile content" is defined as the difference in weight of a given area of the treated paper and the same treated paper sample after complete oven drying at 165°C for 5 minutes, divided by the original weight of the treated paper, expressed as a percentage. After impregnation of the solid color decorative paper with the modified melamine resin, and partial drying through a tunnel oven, the treated paper continuous web so produced is cut into sheets of a desired length and stacked for future use.

### Example 3

To a suitable stainless steel reactor, equipped with a steam heating and cooling water jacket, agitator, condenser, and vacuum pump, are charged, in order, 19.26 parts by weight 37% aqueous formaldehyde solution, 40.57 parts deionized water, and 0.15 parts CRC636 latent catalyst. The pH of the mixture is then adjusted using approximately 0.05 parts of a 30% sodium hydroxide solution, as required, to a pH of 9.6 ± 0.1. Then, 21.31 parts melamine and 4.41 parts dicyanodiamide (1-cyanoguanidine) are charged to the reactor. With the reactor vent open, the agitated mixture is heated for approximately 35 - 40 minutes to atmospheric reflux at about 100°C to 103°C. Reflux is maintained until a water tolerance at 25°C of 170-200% is obtained.

The resin is then rapidly cooled to 80°C using jacket cooling water and vacuum reflux in about 6 minutes. With continued cooling, after venting to atmospheric pressure, in order are charged to the reactor: 0.15 parts 30% sodium hydroxide solution, 1.96 parts dicyanodiamide, and 3.36 parts of a 40:60 mixture of ortho- and para-toluenesulfonamide (OPTS). When the temperature of the resin reaches about 30°C, 6.82 parts of 2-phenoxyethanol and 1.96 parts CRC636 latent catalyst are then charged to the reactor. The latter is used, as necessary, to adjust the final resin pH to 9.1 ± 0.1 at 20°C. The modified melamine resin so prepared has a solids content after drying 3 hours at 135°C of about 42%, a water tolerance at 20°C of about 50%, a Brookfield viscosity at 20°C (spindle #1, speed 100 rpm) of about 10 cps., and a Sunshine gel time at 127°C of about 28 minutes.

### Example 4

A 1.4:1 formaldehyde-to-melamine mol ratio, dicyanodiamide, OPTS and 2-phenoxyethanol modified melamine resin as prepared in Example 3 was used to treat a 158 gsm (97 pound/ream,) titanium dioxide pigmented bleached kraft white filler paper (from Mead/Westvaco Corporation) to 38% - 40% resin content, 4.5% - 5.5% volatile content, and a flow of about 1-3%. As used herein, the term "flow" is determined by pressing, between aluminum foil, 5 disks 40 mm. (1-5/8 inch) diameter of the treated filler paper at about 1280 pounds per square inch (psig) applied specific pressure (90 kg./cm²) between heated platens, controlled at 130°C, for 3 minutes, simulating production press conditions, after which the exuded resin flash is scraped off the consolidated pressed disks. Flow is defined as the difference in weight of the 5 treated paper disks prior to pressing, and the weight of the consolidated disks after pressing with the excess flash removed, divided by the weight of the disks prior to pressing, expressed as a percentage. As a feature of the embodiments of the present invention is to minimize core, and therefore total, laminate volatile or moisture content, so that a desired stress crack resistance is obtained, measuring flow is important to insure the filler retains adequate flow properties for proper press lamination. After impregnation of the pigmented filler paper with the modified melamine core resin, and partial drying through a tunnel oven, the continuous treated paper web so produced is cut into sheets of a desired length and stacked for future use.

### Example 5

The treated solid color decorative and pigmented filler papers made in the previous examples were used to produce through color high pressure decorative laminates in accordance with an embodiment of the present invention. On a steel alloy carrier tray or caul tray were placed, in superimposed relationship, six plies of untreated 187 gsm (115 pounds/ream) kraft paper "cushion", which serves as a pressure and temperature compensation or equalization pad, followed by a doubled-sided, chemically etched, electro-polished and ceramic shot peened, AISI 410 stainless steel, lightly textured press plate, with an average roughness (Ra) of about 2.50 to about 4.00 microns, and a 60° gloss level of about 60 to about 80 units, which during the pressing operation imparts a desired texture and gloss level to the surface of the through color decorative laminate.

On top of the first press plate, a sheet of the modified melamine resin treated decorative solid color paper as prepared in a previous example was placed with the decorative surface, i.e. the felt side of the paper (as opposed to the wire or screen side of the paper) facing downward and in direct contact with the underlying press plate. The following were then stacked in ascending order: five plies of the modified melamine resin treated pigmented core sheets as prepared in a previous example, one ply of biaxially oriented polypropylene (BOPP) film, which serves as a separator sheet to later separate the pairs of laminates so produced after pressing, five additional plies of modified melamine resin treated core sheets, another treated decorative solid color paper, with its felt side facing upward, followed by another press plate. The build-up sequence was repeated until a total of ten laminate material assemblies, as five doublets, were sandwiched between six double-sided press plates. Finally, six plies of 187 gsm kraft paper cushion were placed on top of the last, uppermost press plate. The cushions also serve to protect the two outermost press plate surfaces from damage caused by directly contacting the carrier tray and top press platen after insertion in the press.

The carrier tray, supporting the multiple press plates and laminate material assemblies built upon it, commonly known in the art as a press pack or book, was subsequently inserted into a press opening or daylight between an upper and lower channeled heating and cooling platen comprised of bored 70 to 100 mm. (2.75 to 4 inches) thick alloy steel plate. The size of the press platens determine the maximum size press plates, and therefore treated materials and laminate, that can be produced in a particular press. Typically, high pressure laminating presses will have oversized platen dimensions to accommodate nominal 4 feet x 8 feet, up to 5 feet x 16 feet, or 6 feet x 12 feet laminate sheet sizes, with 4'x8', 4'x10' and 5'x12' generally being the most popular sizes in the marketplace. High pressure, flat bed hydraulic presses are typically designed with multiple platens and openings, such that a number of press packs can be pressed simultaneously during a single press cycle. Presses typically range from about 12 daylights up to 24 or more daylights. For example, in the preferred practice of one embodiment of the present invention, with 10 laminate assemblies per pack, and therefore per press opening, an 18 opening press can process 18 packs, and a total of 180 laminates simultaneously.

It will be understood by those of ordinary skill in the art that the practice and scope of the present invention is not limited by the examples of any of the preferred embodiments as described above. For example, it should be appreciated that various size through color laminates can be produced, limited only by the press platen dimensions, as well as press plate size and paper width availability. It should also be understood that various thicknesses of through color laminates can also be produced within the scope of this invention, simply by varying the number of filler plies, or the basis weight of the filler plies, or a combination thereof. However, in general, thicker laminates exhibit better stress crack resistance but poorer postformability. In addition, a decorative print sheet, preferably in conjunction with a protective overlay sheet, can be used in place of the solid color decorative sheet of the present example.

A large variety of direct release press plate designs, other than the chemically etched press plates described above, can be advantageously used to practice embodiments of the present invention. Such designs can range from a very smooth, highly polished finish, to a deeply textured finish, in a wide range of gloss levels. Conversely, non-stainless steel press plates, for example tempered, and optionally anodized, aluminum alloy plates, or texturing plates or cauls comprised of laminated phenolic resin/kraft paper filler, may also be used. Practice of the present invention is not restricted or limited by use of direct release press plates, in that press plates can also be used in conjunction with a variety of texturing/release papers, for example those commercially available from Ivex Corporation, S.D. Warren Co. (SAPPI), and Wurttemb Kunststoff Plattenwerke GmbH (WKP), or paper-backed aluminum foils such a kraft-backed Caulstock #6 or litho-backed Caulstock #13.

### Example 6

A typical flat bed hydraulic high pressure laminating press is comprised of multiple, horizontal heating/cooling platens positioned between an essentially rigid upper bolster and lower table, all of which are positioned within multiple, vertical "window frames", which contain the hydraulic force applied by multiple "rams". The rams are a symmetric array of cylinders and upstroke pistons mounted on the lower horizontal frame members under the press table. The platens, bored with serpentine channels, are piped to a suitable heating source, such as a steam boiler or high pressure hot water accumulator, as well as to a cooling water source, such as a cooling tower. Rams are piped to low pressure/high flow centrifugal pumps to quickly close the press, as well as high pressure/low flow piston pumps to generate and maintain the desired hydraulic system operating pressure. Both the heating/cooling and hydraulic systems have associated control systems to operate the press during a predetermined "press cycle", typically involving sequentially press close/commence heating, isothermal cure, commence cooling and press open segments.

A laminating press was loaded with multiple packs of treated through color decorative laminate materials and press plates as assembled in a previous example, with one pack per press opening between heating/cooling platens. The press was then closed and pressurized to a hydraulic pressure sufficient to apply a specific pressure of 1280 psig (90 kg./cm²) on the press plates and treated materials sandwiched between them. The press platens were then heated at a controlled, predetermined rate such that the "outside" pairs of laminate in each pack, i.e. sheets 1,2,9 and 10 as assembled, reached a maximum cure temperature of about 128°C in about 22 minutes. Due to differential heat transfer, the temperature of the "inside" pair of laminates in each pack, i.e. sheets 5 and 6 as assembled, reached the maximum 128°C cure temperature about 1 minute later. The outside sheets were held at the 128°C top cure temperature for 9 minutes before full cooling water was applied to the platens. In general, through color high pressure decorative laminates of the present invention, with acceptable properties, can be produced with a top cure temperature of from about 127°C to about 130°C, with outside laminate cure times of from about 8 to about 11 minutes, with the longest time corresponding to the lowest temperature and vice versa, at specific pressures of from about 1140 psig to about 1350 psig (from about 80 kg./cm² to about 95 kg./cm²). The inside sheet temperature reached 45°C in 21 minutes, at which point cooling was discontinued, the press depressurized and opened, the press packs unloaded, and the laminates separated from the press plates. The laminates exhibited no brittleness related pressure breaks typical of melamine resin core through color laminates of the prior art. The laminate edges were trimmed and the laminates then sanded to a final thickness of 1.0 mm. (+/- 0.1 mm. thickness tolerance).

It should be understood by those skilled in the art that the press cycle used in this example, and the related useful ranges of press time, temperature and pressure cited, as they affect the optimum cure level (and density) of the laminate so produced, is dependent on many factors, including, but not limited to the surface and core resin catalyst type and concentration, which affect their cure rates, resin catalytic or inhibitative effects of different overlay, decorative and core papers, as well as the thickness of the laminates and quantity of laminates per pack pressed. In general, the greater the pack thickness, due to more or thicker sheets, the longer the press cycle required, and the greater the resultant outside sheet and inside sheet cure variation. Even with the press pack build-up set forth in this example, higher cure temperatures and longer cure times than those prescribed may result in laminate overcure, which may adversely affect stress crack resistance and postformability. Conversely, lower cure temperatures and shorter cure times may detract from other laminate properties such as boiling water, heat, and blister resistance.

### Example 7

Laminates prepared by the methods described in the preceding examples were evaluated for physical properties by test methods as described in the NEMA LD3-2005 standards for nominal 1.0 mm. (0.039 inch) thick HGP postforming grade HPDL. The results of those tests, as well as other non-standard tests, are summarized in Table 1 below. Note that because the decorative surface layers for the through color laminates were essentially identical to those used for conventional high pressure decorative laminates, surface dependent properties such as light resistance (LD3-3.3), stain resistance (LD3-3.4), and wear (Taber abrasion) resistance (LD3-3.13) were not included.

**TABLE 1**

| NEMA TEST METHOD | PROPERTY | NEMA SPECIFICATION/UNITS | RESULTS |
|---|---|---|---|
| LD3-3.5 | Boiling Water Resistance | Slight Effect | No Effect |
| LD3-3.6 | High Temp. Resistance | Slight Effect | Slight Effect |
| LD3-3.14 | Formability¹ | 16 mm radius (maximum) | 8 mm radius |
| LD3-3.15 | Blister Resistance | 55 seconds (minimum)² | 75 seconds (35 seconds above melt) |
| Stress Crack Resistance (@ 70°C) | | | |
| | (a) Equilibrated 5 Days @ 50% RH | 10 hours (minimum) | 14 hours |
| | (b) Equilibrated 5 Days @ 90% RH | 6 hours (minimum) | 8 hours |
| Large Scale (4'x4') Radial Crack (@ 15% RH)³ | (a) Equilibrated 10 Days @ 50% RH | 2 weeks (minimum) | 20 days |

| | | | |
|---|---|---|---|
| ¹ 90° bend across the machine direction ² 15 seconds above 163°C/40 second melt ³ 90° Corner Cut-Out | | | |

Details of the NEMA test methods are available from the NEMA Standards Publication LD3-2005. Both the small scale Stress Crack test and the large scale Radial Crack test are "non-standard" tests since NEMA does not have comparable standardized test methods for this critical laminate physical property. Both test methods are based on pre-conditioning the sample at moderate to high relative humidity conditions, subjecting the sample to low humidity exposure in a restrained condition, and measuring the duration until cracking occurs due to shrinkage and induced stresses.

The Stress Crack test used an unbonded 12x12 inch (1 ft²) laminate sample, with opposed cutouts midway along opposite edges. The other two opposing edges were restrained in a rigid metal jig and an initial strain was applied to the laminate perpendicular to the direction of the cutouts and prior to placement in an oven. The Radial Crack Test used a 4x4 foot panel assembly with the test laminate bonded to both sides of a 3/4" particleboard substrate using a solvent-based contact adhesive. After conditioning the components and then fabricating the panel, a 6x6 inch cutout was made in the geometric center of the panel. For this test, the cutout had non-radiused, square corners, which is the worst case for crack formation and propagation.

The Table 1 results confirm that the properties of the through color high pressure decorative laminate made in accordance with embodiments of the present invention met or exceeded the established NEMA specifications for conventional 1.0 mm. thick HGP postforming grade HPDL as they relate to laminate cure (boiling water resistance), laminate core integrity (high temperature and blister resistance), and postformability. There are no corresponding NEMA standards developed specifically for through color HPDL. Furthermore, the through color laminates exhibited substantially improved stress crack and radial crack resistance over prior art laminates. By comparison, stress crack resistance of a prior art melamine resin core through color laminate, which was thicker (1.3 mm) and as such should have had inherently better stress crack resistance, when conditioned at 50% R.H. generally failed in 2-3 hours, and when conditioned at 90% R.H., generally failed in about 1 hour or less, when subsequently exposed to a 70°C low humidity environment.

Panel assemblies, surfaced with various through color high pressure decorative laminates, including those made in accordance with embodiments of the present invention as noted, were evaluated for fire resistance in accordance with the ASTM E-84/UL723 large scale tunnel fire test, a generally accepted standard in the industry for building code compliance. Results are summarized in Table 2 below.

**TABLE 2**

| ASTM E-84/UL723 Large Scale Fire Test Results | | | | | | | |
|---|---|---|---|---|---|---|---|
| Core Resin | Resin Content | Adhesive | Substrate | Backer | Flame Spread | Smoke Generation | Class |
| | | | | | | | |
| Specification: | | | | | 0-25 | <450 | I (A) |
| | | | | | 26-75 | <450 | II (B) |
| | | | | | 76-200 | <450 | III (C) |
| | | | | | | | |
| (1) | High** | Solvent-based Contact | 3/4" Standard MDF | Non-FR Rated 0.020" | 75 | 690 | Fail |
| | | | | | | | |
| (1) | High** | Solvent-based Contact | 3/4" Standard Particleboard | Non-FR Rated 0.020" | 63 | 683 | Fail |
| | | | | | | | |
| (2) | High** | Catalyzed PVAc | 3/4" FR Rated Particleboard | Non-FR Rated 0.020" | 22 | 318 | I (A) |
| | | | | | | | |
| (2) | High** | Catalyzed PVAc | 3/4" Standard Particleboard | Non-FR Rated 0.020" | 40 | 555 | Fail |
| | | | | | | | |
| (2) | High** | Solvent-based Contact | 3/4" Standard Particleboard | Non-FR Rated 0.020" | 37 | 608 | Fail |
| | | | | | | | |
| (2) | Low*** | Catalyzed PVAc | 3/4" FR Rated Particleboard | Non-FR Rated 0.020" | 18 | 187 | I (A) |
| | | | | | | | |
| (2) | Low*** | Catalyzed PVAc | 3/4" Standard Particleboard | Non-FR Rated 0.020" | 30 | 430 | II (B) |
| | | | | | | | |
| (2) | Low*** | Solvent-based Contact | 3/4" Standard Particleboard | Non-FR Rated 0.020" | 52 | 418 | II (B) |

| | | | | | | | |
|---|---|---|---|---|---|---|---|
| (1) Prior art ketone-formaldehyde modified melamine-formaldehyde core resin (2) Embodiment of the Present invention with dicyanodiamide, OPTS and 2-phenoxyethanol modified melamine-formaldehyde core resin * All panel assemblies were fabricated under the supervision of, and subsequently tested and results reported by, the Southwest Research Institute. Results of each test were rounded to the nearest 5 unit increment per the test method protocol. The results shown are the average of all tests conducted. ** 158 gsm core paper treated to about 47% resin content and about 7% volatile content; equivalent to about 44.3% by weight resin solids based on the total weight of the impregnated sheet *** 158 gsm core paper treated to about 39% resin content and about 5% volatile content; equivalent to about 37.4% by weight resin solids based on the total weight of the impregnated sheet | | | | | | | |

[ All the panels were balanced with a commercially available, non-fire rated, 0.020 inch (0.50 mm) thick phenolic resin/kraft paper laminate backer sheet. Both the through color decorative laminate and the backer were bonded to non-fire rated MDF, non-fire rated 3/4" 45 pound/ft³ standard particleboard, or fire rated 3/4" 45 pound/ft³ particleboard, using either a commercially available, solvent-based neoprene contact adhesive, or a catalyzed PVAc adhesive.

The contact adhesive was applied by spray gun to both sides of the board, as well as to the sanded backsides of both the decorative laminate and backer sheet. The decorative laminate and backer were then bonded to the board using a pinch roller press. The PVAc adhesive was applied, using a glue spreader, to both sides of the particleboard. The decorative laminate and backer were then bonded to the board using a bladder press. Details of the fire test protocols, and explanation of the test results, are published in the ASTM and UL test methods referenced above.

Results of the fire tests indicate a substantial improvement in fire properties of embodiments of the through color laminate of the present invention, compared to that of a prior art laminate, both in terms of flame spread and smoke generation. The benefits of reduced core resin content with respect to reduced smoke generation are also evident, as is the advantage of applying the through color laminate to a fire rated substrate, which in conjunction meet the ASTM and UL Class I (A) standard. Furthermore, at the preferred lower core resin content, embodiments of the color through laminate of the present invention, bonded to standard particleboad with either catalyzed PVAc or contact adhesive, meet the ASTM/UL Class II (B) fire rating.

It is noted that terms like "preferably", "typically", and "generally" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

For the purpose of describing and defining the present invention it is noted that the term "substantially" is utilized herein to represent the inherent degree of uncertainty that may be attributable to any quantitative comparison, value, measurement, or other representation. The term "substantially" is also utilized herein to represent the degree by which a quantitative representation may vary from a stated reference without resulting in a change in the basic function of the subject matter at issue.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

1. A cellulosic paper sheet having impregnated therein from 32% to 43% by weight of resin solids, based on the total weight of said impregnated sheet, of a melamine-formaldehyde resin, wherein the molar ratio of formaldehyde-to-melamine is in the range of from 1.20:1 to 1.60:1, from 15% to 32% by weight based on total resin solids weight of a plasticizer for said melamine-formaldehyde resin, said plasticizer comprising an amino-functional monomer selected from the group consisting of sulfonamides, guanidines, and substituted melamines, and from 10% to 24% by weight based on total resin solids weight of a combustion accelerant for said melamine-formaldehyde resin, said combustion accelerant comprising a hydroxy or polyhydroxy-functional monomer selected from the group consisting of alcohols and glycols.

2. The impregnated sheet as claimed in claim 1 wherein said sheet comprises pigmented bleached kraft paper, unpigmented bleached kraft paper, pigmented α-cellulose paper or unpigmented α-cellulose paper.

3. The impregnated paper sheet as claimed in claim 1 having impregnated therein from 35% to 40% by weight of resin solids, based on the total weight of said impregnated sheet, of a melamine-formaldehyde resin.

4. The impregnated sheet as claimed in claim 1, wherein the molar ratio of formaldehyde-to-melamine is in the range of from 1.35:1 to 1.45:1.

5. The impregnated sheet as claimed in claim 1 wherein said plasticizer for said melamine-formaldehyde resin is in the range from 18% to 28% by weight based on total resin solids weight.

6. The impregnated sheet as claimed in claim 1 wherein said plasticizer comprises ortho-toluenesulfonamide or para-toluenesulfonamide.

7. The impregnated sheet as claimed in claim 1 wherein said plasticizer comprises cyanoguanidine (dicyanodiamide).

8. The impregnated sheet as claimed in claim 1 wherein said plasticizer comprises 2,4-diamino-6-methyl-triazine (acetoguanamine).

9. The impregnated sheet as claimed in claim 1 wherein said combustion accelerant comprises 2-phenoxyethanol.

10. The impregnated sheet as claimed in claim 1 wherein said combustion accelerant is selected from diethylene glycol and polyethylene glycols.

11. The impregnated sheet as claimed in claim 1 further a core formed by stacking a plurality of said impregnated sheets; and either a decorative solid color sheet overlying said core, said decorative solid color sheet having impregnated therein from 45% to 53% by weight of resin solids, based on the total weight of said impregnated sheet, of a melamine-formaldehyde resin, wherein the molar ratio of melamine to formaldehyde is in the range of from 1.25:1 to 1.45:1, and from 5% to 12% by weight based on total resin solids weight of a plasticizer for said melamine-formaldehyde resin, said plasticizer comprising an amino-functional monomer selected from the group consisting of sulfonamides, guanidines, and substituted melamines; or a decorative print sheet overlying said core, said decorative print sheet having impregnated therein from 33% to 39% by weight of resin solids, based on the total weight of said impregnated sheet, of a melamine-formaldehyde resin, wherein the molar ratio of melamine to formaldehyde is in the range of from about 1.25:1 to about 1.45:1, and from about 5% to about 12% by weight based on total resin solids weight of a plasticizer for said melamine-formaldehyde resin, said plasticizer comprising an amino-functional monomer selected from the group consisting of sulfonamides, guanidines, and substituted melamines.

12. The impregnated sheet as claimed in claim 11 including said decorative solid color sheet and wherein said decorative solid color sheet comprises a solid color pigmented paper.

13. The impregnated sheet as claimed in claim 12 wherein said core and said decorative solid color sheet are substantially the same color.

14. The impregnated sheet as claimed in claim 11 including said decorative print sheet, and wherein said decorative print sheet comprises a printed design on a pigmented print base paper.

15. The impregnated sheet as claimed in claim 14 wherein said core sheet substantially matches the predominant color of said decorative print sheet.

16. The impregnated sheet as claimed in claim 14 further including an overlay sheet which has impregnated therein from 66% to 74% by weight of resin solids, based on the total weight of said impregnated sheet, of a melamine-formaldehyde resin, wherein the molar ratio of formaldehyde-to-melamine is in the range of from 1.25:1 to 1.45:1, and from 5% to 12% by weight of a plasticizer for said melamine-formaldehyde resin, said plasticizer comprising an amino-functional monomer selected from the group consisting of sulfonamides, guanidines, and substituted melamines.

17. The impregnated sheet as claimed in claim 11 bonded to a substrate with an adhesive to form a decorative panel assembly.
